# DEMANDE DE BREVET EUROPEEN

(11) **EP 4 725 773 A1**
(43) Date de publication de la demande: **15.04.2026**
(21) Numéro de dépôt: 25205761.7
(22) Date de dépôt: 30.09.2025
(51) Int. Cl.: B60R 19/52, B60R 19/18

(54) **SOUS-ENSEMBLE DE PARE-CHOCS AVANT POUR VÉHICULE AUTOMOBILE**

(30) Priorité: 08.10.2024 FR 2410843
(71) Demandeur: Stellantis Auto SAS, 78300 Poissy (FR)
(72) Inventeur: PERON, Rodolphe, 95220 Herblay (FR); BOUDAN, Julien, 91210 Draveil (FR); MURUGESAN, Vijaya Kumar, 92100 Boulogne-Billancourt (FR)
(74) Mandataire: BCIP

(57) **Abrégé**

L'invention concerne un sous-ensemble de pare-chocs avant comportant un bouclier supérieur (100), une grille supérieure (200) logée au travers d'une fenêtre ménagée dans ledit bouclier supérieur, un bouclier inférieur (300), ainsi qu'un absorbeur de chocs (400) réalisé dans un matériau polymère expansé et monté fixement à l'arrière dudit bouclier supérieur en dessous de ladite grille supérieure par l'intermédiaire de moyens d'attache ; ces derniers comportant au moins une patte d'accrochage (210) s'étendant depuis ladite grille supérieure et comprenant une portion hémicylindrique d'accueil recevant à pivotement autour d'un axe sensiblement transversal l'extrémité libre d'une languette respective (410) ménagée sur le dessus dudit absorbeur, lesdits moyens d'attache comprenant également au moins une patte de plaquage (310) s'étendant depuis ledit bouclier inférieur et exerçant un effort d'appui orienté vers l'avant contre un organe de butée respectif (420) ménagé sur ledit absorbeur de sorte à le plaquer contre la face arrière dudit bouclier supérieur.

## Description

### [Domaine technique]

La présente invention concerne d'une manière générale les systèmes d'absorption de chocs pour véhicule automobile. Elle vise en particulier un sous-ensemble de pare-chocs avant pour véhicule automobile comprenant un absorbeur réalisé dans un matériau polymère expansé.

### [Technique antérieure]

De manière à respecter les homologations actuelles, les véhicules modernes sont équipés d'un système d'absorption de chocs adapté à la gestion des chocs frontaux entre le véhicule et un piéton, en particulier au niveau de ses jambes. L'objectif est d'une part d'absorber l'énergie du choc et d'autre part de limiter les blessures infligées au piéton et de l'empêcher de passer en-dessous du véhicule.

A cet effet, le système d'absorption de chocs comprend généralement deux parties, une partie dite « voie basse » et une partie dite « voie haute » et la prestation en matière de choc piéton au niveau des jambes est assurée par un compromis de raideur entre la voie haute et la voie basse.

La voie basse est positionnée au niveau du déflecteur central du pare-chocs avant du véhicule et va « fouetter » le bas de la jambe du piéton afin d'éviter que ce dernier ne passe en dessous du véhicule. La voie haute est quant à elle positionnée au niveau de la poutre de pare-chocs avant du véhicule et permet de dissiper l'énergie du choc afin de limiter les blessures du piéton.

L'objectif est de coucher au maximum la jambe afin de limiter le cisaillement du genou. A cette fin, la voie haute comprend un dispositif d'absorption d'énergie dénommé généralement sous le terme « absorbeur » qui se situe entre la poutre de pare-chocs et le bouclier de pare-chocs du véhicule. L'écrasement de cet absorbeur, lors d'une collision, va placer la voie haute dans une position plus en arrière que la voie basse par rapport au véhicule, entraînant de ce fait le couchage de la jambe du piéton en direction du capot du véhicule.

Par ailleurs, le pare-chocs doit présenter une bonne tenue selon la direction longitudinale du véhicule. En particulier, il ne doit pas s'enfoncer sur une distance supérieure à 10 mm lors d'un appui de 25 kg selon l'axe longitudinal du véhicule. Le système d'absorption de chocs doit donc à la fois pouvoir assurer une tenue du pare-chocs et une bonne dissipation de l'énergie lors d'un choc piéton. Un compromis doit alors être trouvé pour assurer ces deux prestations antagonistes.

Afin de garantir une bonne dissipation d'énergie tout en ayant la faculté de revenir en position après avoir été déformé lors d'un choc peu important de type « choc parking », l'absorbeur est formé généralement en un seul bloc réalisé dans un matériau polymère expansé tel que le polypropylène expansé (PPE) ou le polystyrène expansé (PSE).

Présentant une forme allongée et venant occuper la quasi-totalité de l'espace séparant la poutre haute de pare-chocs et le bouclier supérieur de pare-chocs, cet absorbeur est classiquement monté par le fournisseur à l'arrière de ce bouclier supérieur de pare-chocs en dessous de la grille supérieure de pare-chocs logée au travers d'une fenêtre ménagée dans ce bouclier supérieur.

Un bouclier inférieur est généralement rapporté fixement dans le prolongement inférieur de ce bouclier supérieur et le sous-ensemble ainsi constitué est ensuite livré au constructeur pour être assemblé sur la structure de caisse du véhicule en bord de ligne d'assemblage.

Il est connu de réaliser le montage de l'absorbeur sur le bouclier supérieur par l'intermédiaire de deux organes d'attache saillant longitudinalement depuis les deux portions latérales d'extrémité de la face arrière de bouclier supérieur et coopérant par clippage ou empiochage dans deux trous traversant respectifs ménagés dans les portions latérales de cet absorbeur.

A l'usage, et du fait notamment de sa constitution dans un matériau polymère expansé, l'absorbeur a tendance à se désolidariser du bouclier supérieur lors du transport, ce qui contraint les opérateurs à perdre un temps précieux pour le repositionner en bord de ligne d'assemblage, afin que ce sous-ensemble de pare-chocs puisse être monté sur la structure de caisse du véhicule.

Il est également connu du document WO 2024/105321 A1, de remplacer l'un de ces deux organes latéraux par un organe d'attache de type différent, comprenant un doigt s'étendant selon une direction sensiblement transversale, et coopérant par emboîtement avec une cavité allongée s'étendant selon une direction sensiblement transversale dans la seconde portion latérale d'extrémité dudit absorbeur.

Une telle solution de montage permet d'assurer un meilleur maintien de l'absorbeur, mais il arrive encore régulièrement que ce dernier se désolidarise partiellement ou complètement du bouclier supérieur.

### [Exposé de l'invention]

La présente invention vise à améliorer la situation.

Elle propose à cet effet un sous-ensemble de pare-chocs avant pour véhicule automobile, comportant un bouclier supérieur, une grille supérieure logée au travers d'une fenêtre ménagée dans ledit bouclier supérieur, un bouclier inférieur s'étendant dans le prolongement dudit bouclier supérieur, ainsi qu'un absorbeur de chocs réalisé dans un matériau polymère expansé et monté fixement à l'arrière dudit bouclier supérieur en dessous de ladite grille supérieure par l'intermédiaire de moyens d'attache ;
caractérisé en ce que lesdits moyens d'attache comprennent au moins une patte d'accrochage s'étendant depuis ladite grille supérieure et comprenant une portion hémicylindrique d'accueil recevant à pivotement autour d'un axe sensiblement transversal l'extrémité libre d'une languette respective ménagée sur le dessus dudit absorbeur, lesdits moyens d'attache comprenant également au moins une patte de plaquage s'étendant depuis ledit bouclier inférieur et exerçant un effort d'appui orienté vers l'avant contre un organe de butée respectif ménagé sur ledit absorbeur de sorte à le plaquer contre la face arrière dudit bouclier supérieur.

L'invention permet d'éviter tout risque de désolidarisation de l'absorbeur avant le montage de ce sous-ensemble de pare-chocs sur la structure de caisse d'un véhicule automobile. Elle garantit en outre un plaquage permanent par sa mise en contrainte de cet absorbeur contre la face arrière du bouclier supérieur et ce quelles que soient les dispersions de géométrie de ce bouclier supérieur.

Selon des caractéristiques préférées dudit sous-ensemble de pare-chocs avant selon l'invention :
- la portion hémicylindrique d'accueil de chaque dite patte d'accrochage présente une concavité tournée vers l'avant ;
- chaque dite patte d'accrochage comprend une nervure de rigidification s'étendant selon un plan sensiblement vertical depuis la face convexe de sa portion hémicylindrique d'accueil ;
- chaque dite patte d'accrochage s'étend depuis une excroissance respective de ladite grille supérieure, recouverte par ledit bouclier supérieur de sorte à ne pas être visible depuis l'extérieur dudit véhicule ;
- ladite grille supérieure comprend, au niveau de la zone de raccordement entre chaque dite patte d'accrochage et une dite excroissance respective, une nervure de renfort verticale adossée par deux de ses côtés adjacents respectivement à cette patte d'accrochage et à cette excroissance ;
- lesdits moyens d'attache comprennent deux dites pattes d'accrochage s'étendant depuis les deux portions latérales d'extrémité de ladite grille supérieure et coopérant chacune avec une dite languette respective ménagée sur le dessus dudit absorbeur à proximité d'une extrémité latérale correspondante de ce dernier ;
- chaque dite patte de plaquage comprend une paroi de contre-appui venant en appui contre un bossage ménagé sur la face arrière d'un dit organe de butée respectif dudit absorbeur ;
- chaque dite patte de plaquage comprend une paroi de raccordement sensiblement verticale rattachée au bord supérieur dudit bouclier inférieur, une contremarche sensiblement horizontale s'étendant vers l'arrière depuis cette paroi de raccordement, et une dite paroi de contre-appui sensiblement verticale s'étendant vers le haut depuis cette contremarche ;
- chaque dite patte de plaquage s'étend depuis une portion du bord supérieur dudit bouclier inférieur recouverte par ledit bouclier supérieur, de sorte à ne pas être visible depuis l'extérieur du véhicule ; et/ou
- lesdits moyens d'attache comprennent deux dites pattes de plaquage écartées transversalement l'une de l'autre et coopérant avec deux dits organes de butée respectifs ménagés aux deux extrémités latérales dudit absorbeur.

### [Brève description des dessins]

L'exposé de l'invention sera maintenant poursuivi par la description détaillée d'un exemple de réalisation, donnée ci-après à titre illustratif mais non limitatif, en référence aux dessins annexés, sur lesquels :
- [Fig 1] représente une vue de dos d'un sous-ensemble de pare-chocs avant selon l'invention ;
- [Fig 2] est un agrandissement de coupe en perspective d'une zone d'articulation à pivotement entre la grille supérieure et l'absorbeur ;
- [Fig 3] représente un agrandissement en perspective d'une zone d'appui entre une patte de plaquage s'étendant depuis le bouclier inférieur et un organe de butée respectif ménagé sur ledit absorbeur ;
- [Fig 4] est une vue en perspective montrant l'absorbeur après son montage à pivotement sur la grille supérieure ; et
- [Fig 5] représente une vue en perspective de trois quart arrière illustrant l'étape de montage à encliquetage par un mouvement de translation longitudinale d'arrière en avant du bouclier inférieur sur le bouclier supérieur assurant également le plaquage de l'absorbeur contre la face arrière de ce bouclier supérieur.

### [Description détaillée]

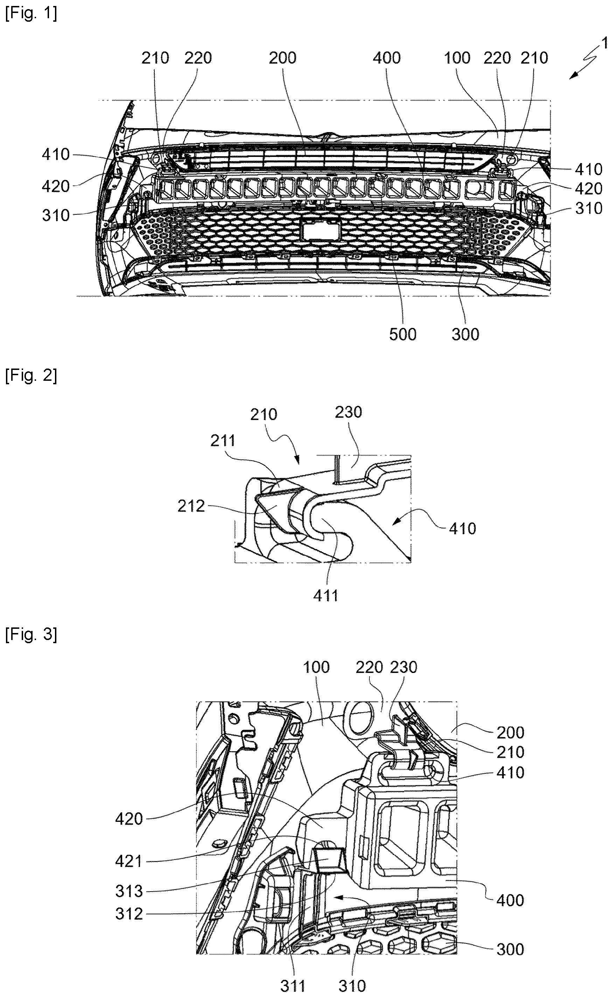

La figure 1 représente une vue en perspective de dos d'un sous-ensemble de pare-chocs avant 1 selon l'invention destiné à être monté sur la structure de caisse d'un véhicule automobile non représenté.

Dans la description qui va suivre et par convention, lorsque l'on fera référence à des qualificatifs d'orientation (tels que les termes « vertical », « transversal » ou « horizontal ») ou de position (tels que les termes « avant », « arrière », « supérieur » ou « inférieur »), ces derniers seront définis par rapport à la position normale de montage de ce sous-ensemble de pare-chocs 1 dans un véhicule et suivant le sens de progression ordinaire de ce dernier.

Enfin, le terme « sensiblement » indiquera qu'un léger écart est admis par rapport à une position ou disposition nominale prédéterminée, tout en restant inclus dans le cadre de l'invention. Par exemple, « sensiblement vertical » indique qu'un écart de l'ordre de 15 à 20° par rapport à une orientation strictement verticale est admis dans le cadre de l'invention.

En référence à cette figure 1, le sous-ensemble de pare-chocs avant 1 selon l'invention comporte :
- un bouclier supérieur 100 ;
- une grille supérieure 200 logée au travers d'une fenêtre ménagée dans le bouclier supérieur 100 ;
- un bouclier inférieur 300 s'étendant dans le prolongement du bouclier supérieur 100 ; et
- un absorbeur de chocs 400 implanté à l'arrière du bouclier supérieur 100 en dessous de la grille supérieure 200.

Les boucliers supérieur et inférieur 100, 300 sont chacun réalisés dans une ou plusieurs pièces plastiques venues de moulage à partir d'un polymère thermoplastique tel que le Polypropylène (PP), le Polyéthylène (PE), le polyamide (PA), l'Acrylonitrile Styrène Acrylate (ASA) ou encore l'Acrylonitrile Butadiène Styrène/Polycarbonate (ABS/PC), renforcé éventuellement en fibres naturelles et/ou synthétiques.

Le bouclier inférieur 300 peut également intégrer une grille inférieure 500.

L'absorbeur 400 est quant à lui constitué d'un seul bloc allongé et réalisé dans un matériau polymère expansé tel que le polypropylène expansé (PPE) ou le polystyrène expansé (PSE).

Par « matériau polymère expansé », on entend un matériau alvéolaire formé d'une phase polymère solide et d'une phase gazeuse dispersée. Ce type de matériau alvéolaire, parfois appelé « mousse » (ou « foam » sous sa dénomination anglo-saxonne) présente pour principaux avantages d'être particulièrement léger et d'avoir la capacité de reprendre sa forme initiale après avoir été déformé.

De manière avantageuse, on utilisera un polypropylène expansé dont la masse volumique est comprise entre 30 et 80 g/L, de préférence entre 30 à 45 g/L.

Destiné à s'étendre longitudinalement entre la poutre haute de pare-chocs du véhicule non représentée et la portion inférieure du bouclier supérieur 100 située sous la grille supérieure 200, l'absorbeur 400 est monté fixement à l'arrière de ce bouclier supérieur 100 en dessous de la grille supérieure 200 par l'intermédiaire de moyens de d'attache que l'on va maintenant décrire plus en détails.

En référence aux figures 1 et 2, ces moyens d'attache comportent au moins une patte d'accrochage 210 s'étendant depuis la grille supérieure 200 et comprenant une portion hémicylindrique d'accueil 211 recevant à pivotement autour d'un axe sensiblement transversal l'extrémité libre 411 d'une languette respective 410 en forme de vague ménagée sur le dessus de l'absorbeur 400.

Un tel agencement permet ainsi de solidariser l'absorbeur 400 à la grille supérieure 200 avant son montage par encliquetage sur le bouclier supérieur 100, tout en lui permettant de pivoter autour d'un axe transversal vis-à-vis de cette grille supérieure 200 de sorte à permettre d'ajuster la position longitudinale de cet absorbeur 400.

Tel qu'illustré par la figure 1, ces moyens d'attache comprennent préférentiellement deux pattes d'accrochage 210 s'étendant depuis les deux portions latérales d'extrémité de la grille supérieure 200 et coopérant chacune avec une languette respective 410 ménagée sur le dessus de l'absorbeur 400 à proximité d'une extrémité latérale correspondante de ce dernier.

Comme on peut le remarquer en particulier sur la figure 3, chaque patte d'accrochage 210 s'étend depuis une excroissance latérale respective 220 de la grille supérieure 200, recouverte par le bouclier supérieur 100 de sorte à ne pas être visible depuis l'extérieur dudit véhicule. Un tel agencement permet ainsi de dissimuler les retassures inévitablement présentes au niveau de la zone de raccordement de cette patte d'accrochage 210 et causées par la rétractation de la matière plastique lors de son refroidissement.

Afin d'éviter tout risque de désolidarisation de l'absorbeur 400 une fois la grille supérieure 200 mise en place, la portion hémicylindrique d'accueil 211 de chaque patte d'accrochage 210 présente avantageusement une concavité tournée vers l'avant.

En outre, et dans le but de limiter la déformation élastique de sa portion hémicylindrique d'accueil 211, chaque patte d'accrochage 210 comprend de préférence une nervure de rigidification 212 bien visible sur la figure 2 et s'étendant selon un plan sensiblement vertical depuis la face convexe de cette portion hémicylindrique d'accueil 211.

Par ailleurs, et afin d'éviter le fléchissement des pattes d'accrochage 210, la grille supérieure 200 comprend, au niveau de la zone de raccordement de chaque patte d'accrochage 210 avec une excroissance respective 220, une nervure de renfort verticale 230 adossée par deux de ses côtés adjacents respectivement à cette patte d'accrochage 210 et à cette excroissance 220 (voir en particulier la figure 3).

Tel qu'illustré par la figure 1, les moyens d'attache de l'absorbeur 400 comportent également au moins une patte de plaquage 310 s'étendant depuis le bouclier inférieur 300 et exerçant un effort d'appui orienté vers l'avant contre un organe de butée respectif 420 ménagé sur l'absorbeur 400 de sorte à le plaquer contre la face arrière du bouclier supérieur 100.

Toujours en référence à cette figure 1, ces moyens d'attache comprennent préférentiellement deux pattes de plaquage 310 écartées transversalement l'une de l'autre et coopérant avec deux organes de butée respectifs 420 ménagés aux deux extrémités latérales de l'absorbeur 400.

Présentant en section longitudinale verticale un profil en forme d'escalier comme on peut le remarquer sur la figure 3, chaque patte de plaquage 310 comprend :
- une paroi de raccordement 311 sensiblement verticale rattachée au bord supérieur du bouclier inférieur 300,
- une contremarche 312 sensiblement horizontale s'étendant vers l'arrière depuis cette paroi de raccordement 311, et
- une paroi de butée 313 sensiblement verticale s'étendant vers le haut depuis cette contremarche 312 et venant en appui contre un bossage 421 ménagé sur la face arrière d'un organe de butée respectif 420 de l'absorbeur 400.

On comprendra que la profondeur de ce bossage 421 pourra être ajustée facilement par retrait ou ajout de matière dans le moule servant à fabriquer l'absorbeur 400, de sorte à régler finement l'effort de plaquage exercé par cet absorbeur 400 contre la face arrière du bouclier supérieur 100.

Tel qu'illustré par cette figure 3, chaque patte de plaquage 310 s'étend avantageusement depuis une portion du bord supérieur du bouclier inférieur 300 recouverte par le bouclier supérieur 100, de sorte à ne pas être visible depuis l'extérieur du véhicule. Un tel agencement permet ainsi de dissimuler les retassures inévitablement présentes au niveau la zone de raccordement de cette patte de plaquage 310 et causées par la rétractation de la matière plastique lors de son refroidissement.

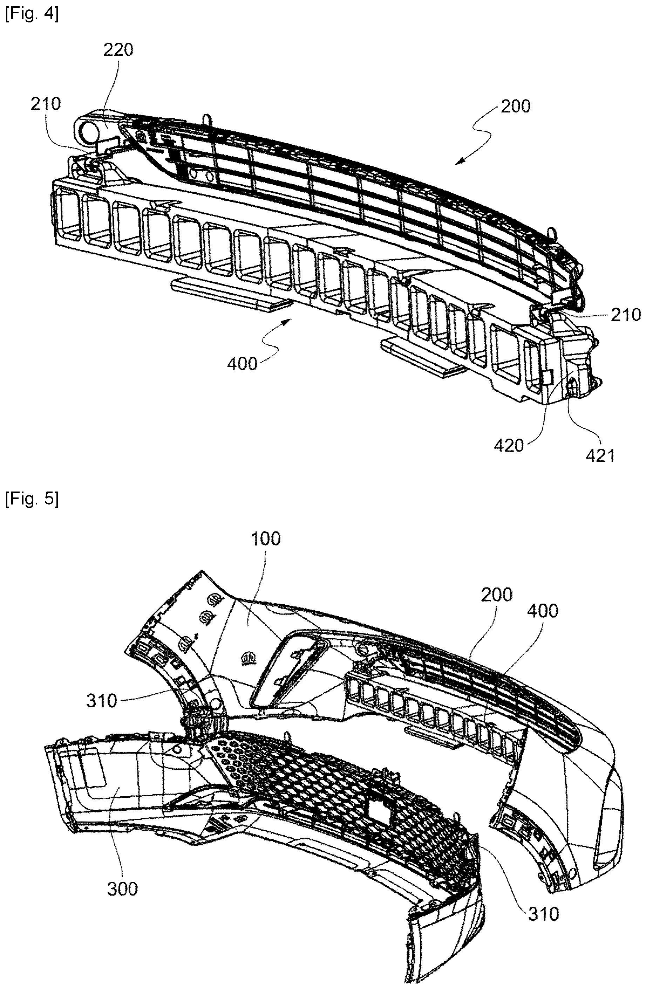

On va maintenant décrire rapidement à l'appui des figures 4 et 5 le processus d'assemblage du sous-ensemble de pare-chocs 1 selon l'invention.

L'absorbeur 400 est tout d'abord monté à pivotement sur la grille supérieure 200 par l'insertion de l'extrémité libre 411 de chaque languette 410 dans la portion hémicylindrique d'accueil 211 d'une patte d'accrochage correspondante 210.

La grille supérieure 200 portant désormais l'absorbeur 400 comme illustré par la figure 4 est ensuite assemblée sur le bouclier supérieur 100 via sa bordure périphérique rapportée fixement à chevauchement par encliquetage contre le pourtour arrière de la fenêtre de ce bouclier supérieur 100 et selon un mouvement longitudinal d'arrière en avant.

Le bouclier inférieur 300 est alors assemblé sur ce bouclier supérieur 100 via son bord supérieur rapporté fixement à chevauchement par encliquetage contre le bord inférieur de ce bouclier supérieur 100 et selon un mouvement longitudinal d'arrière en avant, tel qu'illustré par la figure 5.

Lors de cette dernière étape d'assemblage, chaque patte de plaquage 310 va venir pousser longitudinalement vers l'avant un organe de butée respectif 420 de sorte à provoquer le plaquage de l'absorbeur 400 contre la face arrière du bouclier supérieur 100.

Selon des variantes de réalisation non représentées, le nombre et/ou la conformation des pattes d'accrochage et/ou des pattes de plaquage peuvent différer.

De nombreuses variantes sont envisageables et on rappelle à cet égard que la présente invention ne se limite pas aux formes de réalisation décrites et représentées, mais englobe également toutes les variantes d'exécution à la portée de l'homme du métier.

## Revendications

1. Sous-ensemble de pare-chocs avant (1) pour véhicule
automobile, comportant un bouclier supérieur (100), une grille supérieure (200) logée au travers d'une fenêtre ménagée dans ledit bouclier supérieur (100), un bouclier inférieur (300) s'étendant dans le prolongement dudit bouclier supérieur (100), ainsi qu'un absorbeur de chocs (400) réalisé dans un matériau polymère expansé et monté fixement à l'arrière dudit bouclier supérieur (100) en dessous de ladite grille supérieure (200) par l'intermédiaire de moyens d'attache ;
**caractérisé en ce que** lesdits moyens d'attache comprennent au moins une patte d'accrochage (210) s'étendant depuis ladite grille supérieure (200) et comprenant une portion hémicylindrique d'accueil (211) recevant à pivotement autour d'un axe sensiblement transversal l'extrémité libre (411) d'une languette respective (410) ménagée sur le dessus dudit absorbeur (400), lesdits moyens d'attache comprenant également au moins une patte de plaquage (310) s'étendant depuis ledit bouclier inférieur (300) et exerçant un effort d'appui orienté vers l'avant contre un organe de butée respectif (420) ménagé sur ledit absorbeur (400) de sorte à le plaquer contre la face arrière dudit bouclier supérieur (100).

2. Sous-ensemble de pare-chocs avant (1) selon la revendication 1, **caractérisé en ce que** la portion hémicylindrique d'accueil (211) de chaque dite patte d'accrochage (210) présente une concavité tournée vers l'avant.

3. Sous-ensemble de pare-chocs avant (1) selon l'une des revendications 1 ou 2, **caractérisé en ce que** chaque dite patte d'accrochage (210) comprend une nervure de rigidification (212) s'étendant selon un plan sensiblement vertical depuis la face convexe de sa portion hémicylindrique d'accueil (211).

4. Sous-ensemble de pare-chocs avant (1) selon la des revendications 1 à 3, **caractérisé en ce que** chaque dite patte d'accrochage (210) s'étend depuis une excroissance respective (220) de ladite grille supérieure (200), recouverte par ledit bouclier supérieur (100) de sorte à ne pas être visible depuis l'extérieur dudit véhicule.

5. Sous-ensemble de pare-chocs avant (1) selon la revendication 4, **caractérisé en ce que** ladite grille supérieure (200) comprend, au niveau de la zone de raccordement entre chaque dite patte d'accrochage (210) et une dite excroissance respective (220), une nervure de renfort verticale (230) adossée par deux de ses côtés adjacents respectivement à cette patte d'accrochage (210) et à cette excroissance (220).

6. Sous-ensemble de pare-chocs avant (1) selon l'une des revendications 1 à 5, **caractérisé en ce que** lesdits moyens d'attache comprennent deux dites pattes d'accrochage (210) s'étendant depuis les deux portions latérales d'extrémité de ladite grille supérieure (200) et coopérant chacune avec une dite languette respective (410) ménagée sur le dessus dudit absorbeur (400) à proximité d'une extrémité latérale correspondante de ce dernier.

7. Sous-ensemble de pare-chocs avant (1) selon l'une des revendications 1 à 6, **caractérisé en ce que** chaque dite patte de plaquage (310) comprend une paroi de contre-appui (313) venant en appui contre un bossage (421) ménagé sur la face arrière d'un dit organe de butée respectif (420) dudit absorbeur (400).

8. Sous-ensemble de pare-chocs avant (1) selon la revendication 7, **caractérisé en ce que** chaque dite patte de plaquage (310) comprend une paroi de raccordement sensiblement verticale (311) rattachée au bord supérieur dudit bouclier inférieur (300), une contremarche sensiblement horizontale (312) s'étendant vers l'arrière depuis cette paroi de raccordement (311), et une dite paroi de contre-appui (313) sensiblement verticale s'étendant vers le haut depuis cette contremarche (312).

9. Sous-ensemble de pare-chocs avant (1) selon l'une des revendications 1 à 8, **caractérisé en ce que** chaque dite patte de plaquage (310) s'étend depuis une portion du bord supérieur dudit bouclier inférieur (300) recouverte par ledit bouclier supérieur (100), de sorte à ne pas être visible depuis l'extérieur du véhicule.

10. Sous-ensemble de pare-chocs avant (1) selon l'une des revendications 1 à 9, **caractérisé en ce que** lesdits moyens d'attache comprennent deux dites pattes de plaquage (310) écartées transversalement l'une de l'autre et coopérant avec deux dits organes de butée respectifs (420) ménagés aux deux extrémités latérales dudit absorbeur (400).
